(19)

**Europäisches Patentamt**
**European Patent Office**
**Office européen des brevets**

(11) **EP 4 757 101 A1**

(12) **EUROPEAN PATENT APPLICATION**

(43) Date of publication:
**10.06.2026 Bulletin 2026/24**

(21) Application number: **24217896.0**

(22) Date of filing: **05.12.2024**

(51) International Patent Classification (IPC):
**H02J 3/38** (2026.01)

(52) Cooperative Patent Classification (CPC):
**H02J 3/38;** H02J 3/00144; H02J 2101/40;
H02J 2103/35

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **GE Vernova Technology GmbH**
**5400 Baden (CH)**

(72) Inventor: **WHITEHOUSE, Robert**
**Stafford ST16 1WS (GB)**

(74) Representative: **Openshaw & Co.**
**8 Castle Street**
**Farnham, Surrey GU9 7HR (GB)**

(54) **CONTROLLER AND METHOD FOR CONTROLLING ONE OR MORE COMPONENTS OF A POWER SYSTEM**

(57) Controller (300) and method (400) for controlling one or more components of a power system (100). The power system (100) comprises an AC power node (110) connected to an AC system (104). The controller (300) is configured to determine a first phase angle ($\Phi$) between a first voltage (V1) of the AC power node (110) and a current (Is) of the AC power node (110); determine, based on the first angle ($\Phi$), a second angle ($\delta$) between the first voltage (V1) of the AC power node (110) and a second voltage (V2) of the AC system (104); and output data indicative of at least the second angle ($\delta$) for controlling the one or more components of the power system (100).

Figure 4

**Description**

FIELD OF THE INVENTION

The present invention relates to a controller and a method for controlling one or more components of a power system.

BACKGROUND

A power system may comprise a plurality of electrical generation sources and loads. Conventionally, phase-angle measurement units (PMUs) are distributed throughout the power system, to gather information of voltages and impedances throughout the power system. Information acquired by the PMUs is transmitted to a control centre for processing. Based on the information, the control centre can determine data for controlling one or more components of the power system.

For example, a control centre may determine a phase angle, based on the information acquired by the PMUs. The control centre may then use the phase angle to determine a power demand for controlling a power node.

The conventional approach tends to require an extensive and reliable communication system to transmit the information from the PMUs, and to transmit the data from the control centre. Transmitting information and data in this manner tends to be slow, which is problematic for maintaining stable operation of the power node.

SUMMARY OF THE INVENTION

According to a first aspect, there is provided a controller for controlling one or more components of a power system. The power system comprises an AC power node connected to an AC system. The controller is configured to determine a first phase angle between a first voltage of the AC power node and a current of the AC power node; determine, based on the first angle, a second angle between the first voltage of the AC power node and a second voltage of the AC system; and output data indicative of at least the second angle for controlling the one or more components of the power system.

The present invention tends to improve on the conventional approach by only using measurements local to a power node, to determine data for controlling one or more components of the power system. Because the present invention only relies on local measurements to determine the data, there tends not to be a need to gather and transmit data throughout the power system, and the associated time delays tend to be reduced or eliminated. Thus, in the present invention, components of the power system can be controlled relatively quickly compared to a conventional approach.

The controller may be configured to output the data to the one or more components of the power system to control the one or more components of the power system.

The one or more components of the power system may comprise the AC power node.

The controller may be configured to determine one or more parameters for regulating an input or output power of the AC power node, wherein the one or more parameters are determined based on the first angle and/or the second angle; and provide the one or more parameters to the AC power node to control the AC power node.

The output power may be real or reactive power. The AC power node may be configured to transfer real or reactive power to the AC system.

The input power may be real or reactive power. The AC power node may be configured to absorb real or reactive power from the AC system.

The AC power node may be configured to operate as a real power source or generator.

The AC power node may be configured to operate as a real power load.

The AC power node may be a power generation means and/or a power conversion means.

The AC power node may be an AC synchronous machine.

The AC power node may be a power electronics-based power converter.

The controller may be configured to calculate a third angle based on the first angle, wherein the third angle is a phase difference between the first voltage and a third voltage, wherein the third voltage represents a voltage across an impedance of the power system; and determine the second angle based on the third angle.

The controller may be configured to calculate the third angle according to the equation: $\beta = 90 - \Phi$, wherein $\beta$ is the third angle, and $\Phi$ is the first angle.

The controller may be configured to determine the second angle according to the equation: $\delta = 180 - 2\beta$, wherein $\delta$ is the second angle and $\beta$ is the third angle.

The controller may be configured to calculate a minimum value for the third angle, according to the

equation: $\beta min = \tan^{-1}\dfrac{V2}{V1}$ , wherein $\beta min$ is the

minimum value for third angle, V1 is the first voltage, and V2 is the second voltage.

The controller may be configured to use a static value for a minimum value for the third angle.

The static value may be 45 degrees.

The controller may be configured to determine the one or more parameters by implementing a closed-loop control system, such that, in operation of the AC power node, the third angle is maintained above the minimum value.

The controller may be configured to determine, subsequent to providing the one or more parameters to the AC power node, the output power of the AC power node; determine whether the input or output power of the AC power node substantially matches an expected input or output power; and in response to the input or output power not substantially matching the expected input or output power, provide one or more updated parameters to the AC power node for regulating the first voltage to a predetermined operational limit of the AC power node.

The controller may be configured to compare the first angle to a first threshold to determine a first result.

The controller may be configured to compare the second angle to a second threshold to determine a second result.

The data may comprise the first and/or second results.

The one or more components may comprise a monitoring system. The controller may be configured to provide the data to the monitoring system such that the monitoring system can determine an indication of a health of the AC system based on the data.

The one or more components may comprise an alarm system. The controller may be configured to provide the data to the alarm system for the alarm system to initiate an alarm based on the data.

The controller may be configured to determine a fault condition in the power system; and in response to determining the fault condition, stop outputting the data for controlling the one or more components of the power system.

According to a second aspect, there is provided a power system comprising an AC power node connected to an AC system; one or more components; and a controller according the first aspect. The controller is configured to control the one or more components of the power system. The AC power node preferably comprises a power converter or a synchronous machine; and the one or more components comprise at least one of: the AC power node; a monitoring system; an alarm system.

According to a third aspect, there is provided a method for controlling one or more components of a power system, wherein the power system comprises an AC power node connected to an AC system. The method comprises determining, by a controller, a first phase angle between a first voltage of the AC power node and a current of the AC power node; determining, by the controller, based on the first angle, a second angle between the first voltage of the AC power node and a second voltage of the AC system; and outputting, by the controller, data indicative of at least the second angle for controlling the one or more components of the power system.

Generally, the controller disclosed herein tends to be configured to execute the methods described herein.

The method may comprise outputting the data to the one or more components of the power system to control the one or more components of the power system.

The method may comprise determining one or more parameters for regulating an input or output power of the AC power node, wherein the one or more parameters are determined based on the first angle and/or the second angle; and provide the one or more parameters to the AC power node to control the AC power node.

The method may comprise calculating a third angle based on the first angle, wherein the third angle is a phase difference between the first voltage and a third voltage, wherein the third voltage represents a voltage across an impedance of the power system; and determine the second angle based on the third angle.

The method may comprise calculating the third angle according to the equation: $\beta = 90 - \Phi$, wherein $\beta$ is the third angle, and $\Phi$ is the first angle.

The method may comprise determining the second angle according to the equation: $\delta = 180 - 2\beta$, wherein $\delta$ is the second angle and $\beta$ is the third angle.

The method may comprise calculating a minimum value for the third angle, according to the equation:

$$\beta\min = \tan^{-1}\frac{V2}{V1}$$, wherein $\beta\min$ is the minimum

value for third angle, V1 is the first voltage, and V2 is the second voltage.

The method may comprise using a static value for a minimum value for the third angle. The static value may be 45 degrees.

The method may comprise determining the one or more parameters by implementing a closed-loop control system, such that, in operation of the AC power node, the third angle is maintained above the minimum value.

The method may comprise determining, subsequent to providing the one or more parameters to the AC power node, the output power of the AC power node; determine whether the input or output power of the AC power node substantially matches an expected input or output power; and in response to the input or output power not substantially matching the expected input or output power, provide one or more updated parameters to the AC power node for regulating the first voltage to a predetermined operational limit of the AC power node.

The method may comprise comparing the first angle to a first threshold to determine a first result.

The method may comprise comparing the second angle to a second threshold to determine a second result.

The data may comprise the first and/or second results.

The one or more components may comprise a monitoring system. The method may comprise providing the data to the monitoring system such that the monitoring system can determine an indication of a health of the AC system based on the data.

The one or more components may comprise an alarm system. The method may comprise providing the data to the alarm system for the alarm system to initiate an alarm based on the data.

The method may comprise determining a fault condition in the power system; and in response to determining the fault condition, stop outputting the data for controlling the one or more components of the power system.

According to a fourth aspect, there is provided a computer program comprising instructions which when executed by a processor of a controller, cause the controller to perform the method of the third aspect.

According to a fifth aspect, there is provided a non-transitory computer-readable storage medium comprising the computer program of the fourth aspect.

It will be appreciated that particular features of different aspects of the invention share the technical effects and benefits of corresponding features of other aspects of the invention. More specifically, the technical effects and benefits of the controller, the power system, the computer program, and the non-transitory computer-readable medium, are shared by the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

BRIEF DESCRIPTION OF THE DRAWINGS

Figure 1 is a schematic illustration of an example power system including an AC power node and an AC system;

Figure 2 is an example phasor diagram showing voltage phasors of the power system of Figure 1;

Figure 3 is a schematic illustration of a controller for controlling one or more components of the power system of Figure 1;

Figure 4 is a process flow chart showing certain steps of a method for controlling one or more components of the power system of Figure 1;

Figure 5 is an example phasor diagram showing voltage and current phasors of the power system of Figure 1 in an operating scenario; and

Figure 6 is an example phasor diagram showing voltage and current phasors of the power system of Figure 1 in a different operating scenario.

DETAILED DESCRIPTION

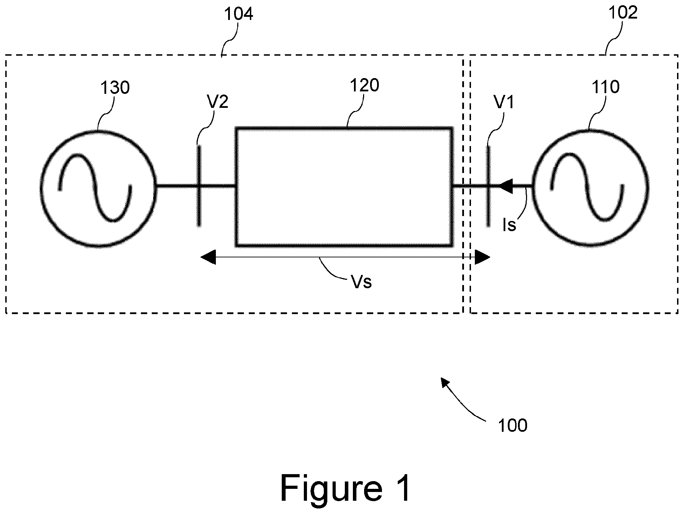

Figure 1 illustrates generically an example of a power system 100. The illustration is not intended to be limited to representing a particular power system, but is moreover provided as a generic example illustrating principles of operation of a power system that are useful for understanding aspects of the invention.

A full representation of an AC power system can be reduced to a simpler model comprising a power node of interest, an AC system power source and an AC system impedance. Thus, the power system 100 of Figure 1 is shown as comprising a power station 102 and an AC system 104. The power station 102 comprises an AC power node 110. The AC system 104 comprises an AC system power source 130 and an AC system impedance 120.

An AC power node is a node in the power system 100 that is configured to transfer real and/or reactive power into or out of the AC system 104. The AC power node may thus be a power generation means and/or a power conversion means. For example, the AC power node may be an AC synchronous machine, or a power electronics-based power converter (for example, an inverter, a rectifier, etc.). The AC power node may be configured to operate as, for example, a real power source or generator, or a real power load. In this example, the AC power node 110 is a power electronics-based power converter, and is referred to henceforth as an AC power source 110.

The AC system power source 130 represents the combined generating and load of the entire AC system 104, whilst the connecting AC system impedance 120 represents the impedance of all of the AC lines within the AC system 104. As such, the AC system power source 130 is connected to the AC system impedance 120 which is connected to the AC power source 110. The AC power source 110 generates a voltage V1 between the AC power source 110 and the AC system impedance 120, which is referred to herein as a first voltage V1. The AC system power source 130 generates a voltage V2 between the AC system power source 130 and the AC system impedance 120, which is referred to herein as a second voltage V2. Analytically, a voltage Vs is also seen across the AC system impedance 120, which is referred to herein as a third voltage Vs. Generally, the third voltage Vs represents the difference between the first voltage V1 and the second voltage V2. An AC current 'Is' is also shown as flowing from the AC power source 110 towards the AC system impedance 120.

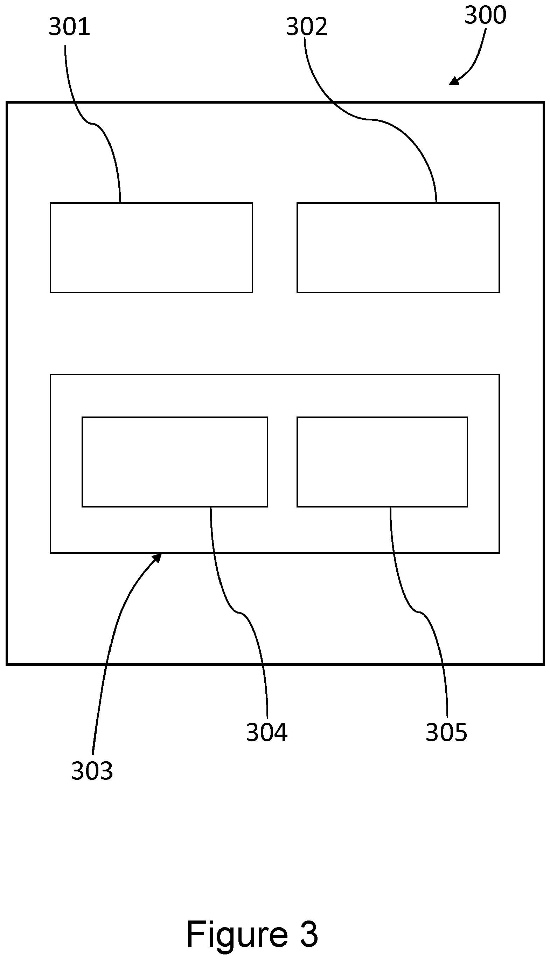

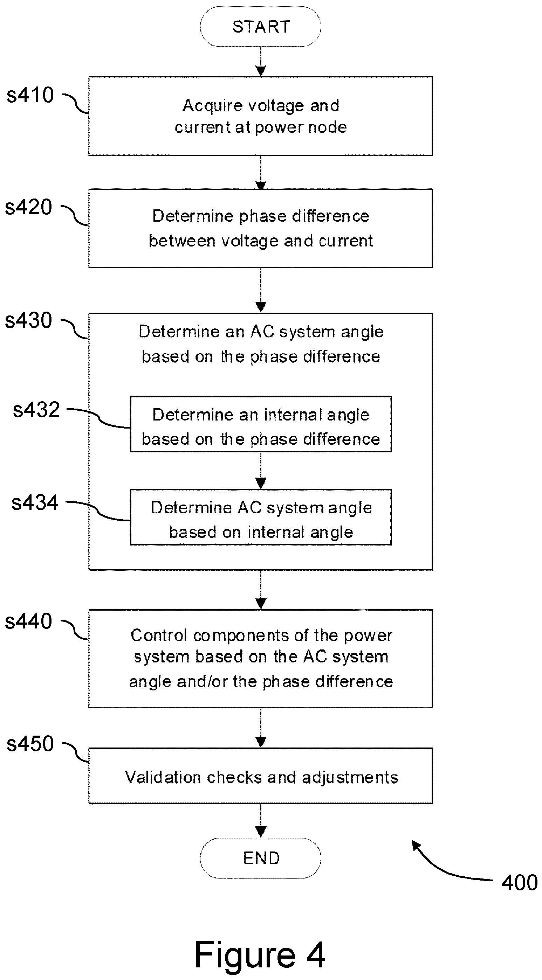

Whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the power system 100 and herein discussed can be applied to power systems comprising the controller 300 of Figure 3, for instance; or power systems controlled according to a method 400 of Figure 4.

As discussed above, in this example, the AC power source 110 is a power converter. A power converter is a device that uses power electronics to perform power conversion and related power functions. The AC power source 110 is configured to synthesise an AC voltage waveform, as the first voltage V1, suitable for providing real or reactive power to, or absorbing real or reactive power from, the AC system 104. In this manner, the AC power source 110 is configurable to provide or receive power from the AC system 104.

The operation of the power system 100 can be generically described as follows. Because the AC system power source 130 represents a plurality of generation and load sources in the power system 100, the combined effect of the plurality of generation and load sources, from the perspective of the power station 102, produce the second voltage V2. The combined effect of the plurality of impedances in the power system 100, from the perspective of the power station 102, produce the AC system impedance 120.

In operation, the AC power source 110 produces the first voltage V1. Because the first voltage V1 is on a first end of the AC system impedance 120, and the second voltage V2 is on a second end of the AC system impedance 120, the relationship between the first voltage V1 and the second voltage V2 defines an amount of power transferred between the power station 102 and the AC system 104.

Because AC power systems produce alternating currents and voltages, the voltages and currents in the power system 100 generally have real and imaginary components. Accordingly, it is suitable to represent and analyse the voltages and currents of the power system 100 as phasors.

It is generally understood that a phasor is a complex number representing a sinusoidal function whose amplitude, and initial phase are time-invariant and whose angular frequency is fixed.

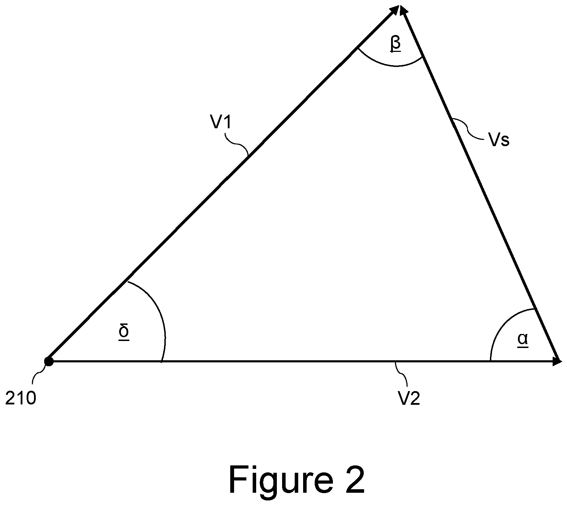

Phasors may be applied in the steady-state analysis of an electrical power system where all signals are assumed to be sinusoidal with a common frequency. Phasor representation allows the amplitude and phase angle of parameters of the power system, for example voltage and current, to be represented in a simple manner and using a phasor diagram, for example as shown in Figures 2, 5, and 6 which are discussed in more detail below.

Figure 2 is a phasor diagram showing phasors of the power system 100 in a first operating scenario. Each phasor comprises an amplitude and a phase angle. Figure 2 shows the first voltage V1 which is referred to herein as a first voltage phasor V1; the second voltage V2 which is referred to herein as a second voltage phasor V2; the third voltage Vs which is referred to herein as a third voltage phasor Vs.

The second voltage phasor V2 is shown as an arrow extending from an origin 210 in a horizonal direction. The extension of the second voltage phasor V2 in the horizontal direction indicates that the second voltage phasor V2 is at a phase angle of zero. Or, in other words, each of the other phasors shown in Figure 2 are measured or defined relative to the second voltage phasor V2.

A specific value is not shown for the amplitude of the second voltage phasor V2, or for the specific angle or amplitude of any of the other voltage or current phasors in Figures 2, 5 and 6, as the principles of the invention can be understood based upon the relative amplitudes and phase angles of the phasors. Therefore, the invention should not be limited to any specific amplitude or phase angle for the voltage and current phasors, but more rather, the invention is applicable to any voltage and current phasors that tend to follow the general principles of the invention as described herein.

The first voltage phasor V1 in the first scenario extends at an angle $\delta$ relative to the direction of the second voltage phasor V2. The third voltage phasor Vs is the difference between the second voltage phasor V2 and the first voltage phasor V1. In other words, the second voltage phasor V2 plus the third voltage phasor Vs equals the first voltage phasor V1. The third voltage phasor Vs is at an internal angle $\alpha$ (i.e., an acute angle, although an equivalent obtuse angle could also be used) relative to the direction of the second voltage phasor V2. The third voltage phasor Vs intercepts the direction of the first voltage phasor V1 at an internal angle $\beta$.

During operation of the power system 100, the second voltage phasor V2, the third voltage phasor Vs, and the AC system impedance 120 may vary as a result of changes in electrical power generation sources and loads in the AC system 104. Accordingly, during operation of the power system 100, it is generally required to regulate the power output from the AC power source 110 in accordance with the needs of the AC system 104. The requirements or needs of the AC system 104 may include, for example, a transfer of real or reactive power, either into or out of the AC system 104, in order to maintain a frequency, or a voltage, or a current of the AC system 104, etc., as will be discussed in more detail below.

It will be appreciated that various other electrical components may be located at any particular location or with any particular feature/component in the power system 100. These may include power converter valves, switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics. Power electronic converters may comprise multi-level voltage sourced converters, for instance.

Moreover, it will be understood that the power system 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

The power system 100 may further comprise a controller for controlling the operation of components of the power system 100. For instance, a controller may be provided for executing the methods described herein. Such a controller may control the power system 100, for instance. Such a controller may be referred to as a controller means or control means. The controller may be the controller 300 of Figure 3.

Figure 3 illustrates an embodiment of a controller 300 as may be used in implementing the invention described herein.

The controller 300 comprises a memory 301 and at least one processor 302. The memory 301 comprises computer-readable instructions, which when executed by the at least one processor 302, cause the controller 300 to perform the method/s described herein.

The controller 300 is shown as comprising a transceiver arrangement 303 which may comprise a separate transmitter 304 and receiver 305. The transceiver arrangement 303 may be used to operatively communicate with other components or features of embodiments described herein either directly or via a further interface such as a network interface. The transceiver arrangement 303 may for instance send and receive control signals using transmitter 304 and receiver 305. The control signals may contain or define electrical control parameters such as reference currents or reference voltages.

The at least one processor 302 is capable of executing computer-readable instructions and/or performing logical operations. The at least one processor 302 may be a microcontroller, microprocessor, central processing unit (CPU), field programmable gate array (FPGA) or similar programmable controller. The controller may further comprise a user input device and/or output device. The processor 302 is communicatively coupled to the memory 301 and may in certain embodiments be coupled to the transceiver 303.

The memory 301 may be a computer readable storage medium. For instance, the memory 301 may include a non-volatile computer storage medium. For example, the memory 301 may include a hard disk drive, flash memory etc.

Whilst not shown, the controller 300 may additionally include a user input device interface and/or a user output device interface, which may allow for visual, audible or haptic inputs/outputs. Examples include interfaces to electronic displays, touchscreens, keyboards, mice, speakers and microphones.

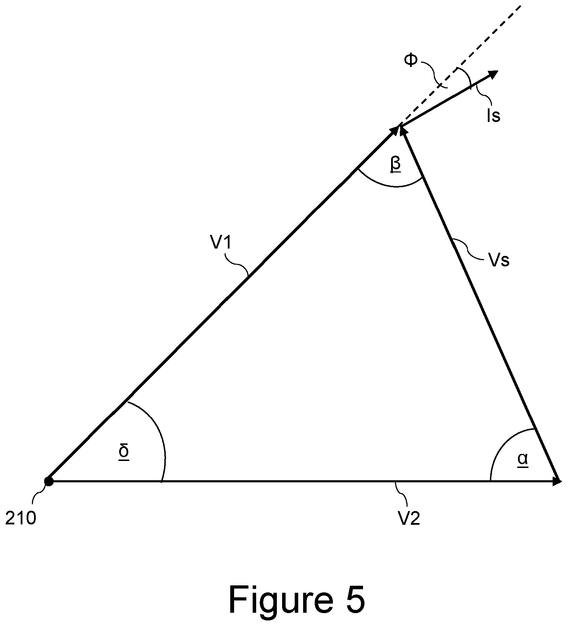

With reference to Figures 4 and 5, the invention will now be discussed in relation to different operating scenarios of the power system 100.

The controller 300 is configured to control one or more components of the power system 100. In this embodiment, the one or more components of the power system 100 comprises the AC power source 110, and the controller 300 is configured to control the AC power source 110 by providing the AC power source 110 with control parameters. In this embodiment, the AC power source 110 is a power converter.

The control parameters are an example of one or more parameters for regulating an output power of the AC power source.

In the first operating scenario, as described above, the power system 100 is operating with the AC power source 110 generating the first voltage V1 and providing power to the AC power system 104. The current Is flows from the AC power source 110 to the AC power system 104. The AC power system 104 has a plurality of power generation sources and loads, which are represented in Figure 1 by the AC system power source 130, the second voltage V2, and the AC system impedance 120.

In the first operating scenario, the controller 300 has already determined and provided control parameters to the AC power source 110, such that the AC power source 110 supports the power requirements of the AC system 104 (i.e., a transfer of real or reactive power into or out of the AC system). The power generation and load sources in the AC system 104 are stable. The first voltage phasor V1, the second voltage phasor V2, and the third voltage phasor Vs are shown in Figure 5 and are similar to that described above in relation to Figure 2. Additionally, Figure 5 also shows a current phasor Is, which represents the current Is. The current phasor Is is at an angle Φ relative to the direction of the first voltage phasor V1.

In normal operation it is common practice to keep the angle δ at less than 30 degrees to maintain system stability in the event of disturbances. Neglecting any other constraints (such as thermal limits), the theoretical maximum power transmission is reached when the angle δ is 90 degrees. In practice this cannot be achieved, and a more practical maximum limit would be around 60 degrees. However, maintaining the angle δ at 60 degrees is usually only possible for a short duration, for example the duration of a disturbance.

In a second operating scenario, the generation and/or load sources in the AC system 104 change. The change in the generation and/or load sources cause the second voltage phasor V2 to change. This causes a change in the angle δ.

Failing to limit the angle δ to below 90 degrees may cause the collapse of the AC system voltage V2, and/or the loss of control of power transmission. To avoid this condition requires a comprehensive knowledge of the magnitude and phase angles of voltages throughout the AC system 104 along with various line impedances. This is conventionally achieved using phase-angle measurement units (PMU's) which are distributed throughout the AC system 104. The information gathered by the PMU's can be communicated to a unit for processing to determine the angle $\delta$ and then an appropriate power demand for the AC power source 110. The appropriate power demand is a power demand that, for example, causes the angle $\delta$ to remain below 90 degrees.

In other words, a load flow study is undertaken every time the configuration of the AC system 104 changes, and an updated power requirement is accordingly determined for the AC power source 110.

Conventionally, after such updated power requirements have been determined, a system load dispatch centre then issues (re-despatches) the updated power requirements to the AC power source 110 (sometimes referred to as run backs). A controller for the AC power source 110 then updates the control parameters for the AC power source 110 accordingly.

Because of this, the conventional approach tends to require an extensive and reliable communication system to determine and transmit the updated power requirements to the AC power source 110. Whilst the information is being determined and transmitted, the AC power source 110 continues to operate according to the control parameters set in the first operating scenario. However, because there has been a change in the electrical load or generation of the AC system 104, the phase angle between the AC power source 110 and the AC system 104 may become excessive (for example, at a value equal to or greater than 60 degrees), because the control parameters are not set suitably for the second operating scenario. This may cause power links or protection circuitry connected to the AC power source 110 to trip or to activate.

In other words, a conventional approach tends to be slow, which is problematic for maintaining stable operation of the AC power source 110.

The present invention tends to improve on the conventional approach by only using measurements or data local to the AC power source 110 to determine the angle $\delta$. Because the present invention only relies on local measurements to determine the angle $\delta$, there tends not be a need to gather and transmit data throughout the AC system 104, and the associated time delays tend to be reduced or eliminated. Thus, in the present invention, components of the power system 100, that require knowledge of the angle $\delta$, can be controlled relatively quickly compared to a conventional approach.

For example, in the particular embodiment described, updated control parameters can be provided to the AC power source 110 relatively quickly, which tends to reduce the likeliness of the angle $\delta$ becoming excessive. Consequently, the likeliness of protection equipment or the like tripping or activating also tends to be reduced.

These and other benefits tend to be realised when controlling one or more components of the power system 100 according to the methods disclosed herein.

With reference to Figure 4, a method 400 is disclosed which can be used to control one or more components of the power system 100. As discussed above, in this embodiment, the one or more components of the power system 100 is the AC power source 110. As such, the method 400 can be used to determine the angle $\delta$. The AC power source 110 can then be controlled in order to regulate the angle $\delta$ to an acceptable value for the second operating scenario.

In a step s410, the controller 300 acquires a voltage of an AC power node i.e., of AC power source 110, and a current of the AC power node i.e., of AC power source 110. The voltage of the AC power source 110 is the first voltage phasor V1, and the current of the AC power source 110 is the current phasor Is, as shown in Figure 5. The controller 300 acquires the first voltage phasor V1 by measuring the voltage waveform at terminals of the AC power source 110, and acquires the current phasor Is by measuring the current waveform at the terminals of the AC power source 110.

In a step s420, the controller 300 determines the angle $\Phi$ between the first voltage phasor V1 and the current phasor Is, which is referred to herein as a first angle $\Phi$. The first angle $\Phi$ may also be referred to as a first phase angle $\Phi$.

The controller 300 determines the first angle $\Phi$ by measuring a phase difference between the first voltage phasor V1 and the current phasor Is. Because the first voltage phasor V1 and the current phasor Is can both be determined locally to the AC power source 110, the controller 300 is able to determine the first angle $\Phi$ without requiring data from the AC system 104.

In a step s430, the controller 300 uses the determined first angle $\Phi$ to determine the angle $\delta$ (referred to herein as a second angle $\delta$).

In order to determine the second angle $\delta$, a number of assumptions are initially made. Firstly, it is assumed that the impedance 120 of the AC system 104 is substantially only inductive. Whilst this is not strictly true, in practice the impedance 120 is essentially that of one or more AC lines and the typical AC line has an impedance angle of around 85 degrees. This tends to mean that the inductive impedance is approximately 11 times that of the resistance, and therefore the assumption is realistic.

Secondly, it is assumed that the amplitude of the first voltage phasor V1 and the amplitude of the second volage phasor V2 are substantially equal. In practice there are only small differences between the first voltage phasor V1 and the second volage phasor V2, which tend to not impinge on the principles of operation of the invention disclosed herein. Adjustments can be made, as described in more detail below, in order to account for some of these assumptions.

During the step s430, in order to determine the second angle $\delta$, the controller 300 performs two substeps.

In a sub-step s432, the controller 300 calculates a third angle β based on the first angle Φ. The third angle β is the angle at which the third voltage phasor Vs intercepts the direction of the first voltage phasor V1, as described above in relation to Figure 2. The controller is configured to calculate the third angle β according to Equation 1 below.

$$\beta = 90 - \Phi$$

## Equation 1

In Equation 1, β is the third angle and Φ is the first angle. Equation 1 is based on the phase angle of the current phasor Is of the AC power source 110 lagging the third voltage phasor Vs by 90 degrees, which is true when the impedance 120 is substantially only inductive. Equation 1 implies that the voltage across an inductance is in quadrature to the current flow.

In a sub-step s434, the controller 300 determines the second angle δ according to Equation 2 below.

$$\delta = 180 - 2\beta$$

## Equation 2

In Equation 2, δ is the second angle and β is the third angle. Equation 2 is based on trigonometric principles as can be seen in Figures 2 and 5. In particular, because the first voltage phasor V1 and the second voltage phasor V2 are substantially equal, the first voltage phasor V1, the second voltage phasor V2 and the third voltage phasor Vs form an isosceles triangle. Therefore, the third angle β and the angle α between the third voltage phasor Vs and the second voltage phasor V2 will be equal. Because the sum of the internal angles of a triangle is 180 degrees, the second angle δ is therefore 180 minus the third angle β multiplied by two.

In this manner, the controller 300 can determine the second angle δ based on the third angle β.

Once step s430 is completed, the controller 300 has determined the second angle δ (i.e., the phase angle between the first voltage phasor V1 and the second voltage phasor V2), using only local measurements. The second angle δ can now be used to determine updated control parameters for the AC power source 110.

At step s440, the controller 300 determines control parameters based on the first angle Φ and/or the second angle δ for regulating an output power of the AC power source 110. The controller 300 then provides the control parameters to the AC power source 110 to control the AC power source 110.

The control parameters may comprise a power reference for the AC power source 110. For example, if the second angle δ is determined at step s430 to be greater than 60 degrees, the controller 300 may determine an updated power reference for the AC power source 110 that would cause the second angle δ to reduce.

In this manner, the controller 300 outputs data indicative of at least the second angle δ for controlling the one or more components of the power system 100.

In this manner, the controller 300 uses only measurements or data local to the AC power source 110 to determine the control parameters for the AC power source 110 to support the AC system 104.

Accordingly, by using the method 400 in the second operating scenario, the benefits as discussed above tend to be realised.

The control parameters may be determined by the controller 300 implementing a closed-loop control system. The controller 300 may implement the closed-loop control system by iteratively performing steps s410 to s440 of the method 400 such that, in operation of the AC power source 110, the power reference provided to the AC power source 110 causes the third angle β to be maintained above a threshold value. By maintaining the third angle β above a threshold value (referred to herein as a β-threshold), which may typically be 45 degrees, in operation of the AC power source 110, a maximum current capability of a transmission corridor connected to the AC power source 110 can be maintained in a stable manner.

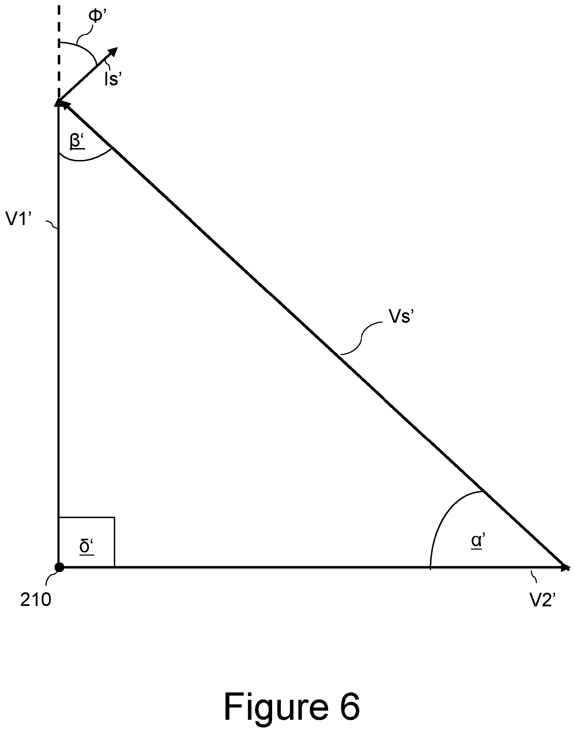

With reference to Figure 6, a third operating scenario is disclosed in which the first voltage V1 and the second voltage V2 are equal and the second angle δ is 90 degrees, which is a theoretical maximum limit for the second angle. In Figure 6, the phasors and angles of the power system 100, as shown in Figure 5, are denoted with an asterisk. For example, the second voltage phasor is denoted with V2'.

In the third operating scenario, the third angle β should theoretically be 45 degrees (because the first voltage V1 and the second voltage V2 are equal, and the second angle δ should be at the maximum of 90 degrees). However, if the measured value of the third angle β is determined (using the methods as discussed above) to be less than 45 degrees, for example 30 degrees, then this is an indication that the AC power source 110 is operating in an unstable manner. In other words, this is an indication that the third angle β is below the β-threshold.

In such a scenario, at the step s440, the controller 300 determines and outputs control parameters for the AC power source 110, to cause the third angle β to converge back to 45 degrees or higher. As a result, the stability of the AC power source 110 tends to be improved.

In an alternative to the third operating scenario, the first voltage V1 and the second voltage V2 may not be equal, and as a result a β-threshold of 45 degrees may not be correct. Therefore, a different theoretical minimum value for the third angle β is required in order to maintain the second angle δ to less than 90 degrees. In such a scenario, the controller 300 determines a β-threshold according to Equation 3 below.

$$\beta = \tan^{-1}\frac{V2}{V1}$$

## Equation 3

In Equation 3, $\beta$ is the $\beta$-threshold, V1 is the first voltage phasor, and V2 is the second voltage phaser. Using Equation 3, the controller 300 may determine the $\beta$-threshold to be, for example, 42 degrees.

Calculating the $\beta$-threshold in this manner changes the minimum value the third angle $\beta$ can take to ensure that the second angle $\delta$ is maintained to less than 90 degrees.

In such a scenario, at the step s440, the controller 300 determines and outputs control parameters for the AC power source 110, to cause the third angle $\beta$ to converge to 42 degrees or higher. As a result, the stability of the AC power source 110 tends to be improved.

At step s450, in any of the operating scenarios, the controller 300 may perform validation checks to ensure the AC power source 110 is operating as expected, for example by receiving data indicative of the second voltage V2, and make adjustments to the control parameters if required.

Thus, the controller 300 may determine that the control parameters provided to the AC power source 110 have, in a stabilised operation of the AC power source 110, resulted in the AC power source 110 not outputting an expected amount of power in relation to the power requirement provided by the controller 300 at the step s440. In other words, the controller 300 may determine, subsequent to providing the one or more parameters to the AC power source 110, the output power of the AC power source; and determine whether the output power of the AC power source 100 substantially matches an expected output power.

In any of the operating scenarios, if the third angle $\beta$ is determined to be at the $\beta$-threshold (for example, 45 degrees or 42 degrees), and at the step s450 the second voltage V2 is less than its rated value, then the controller 300 may output control parameters that cause the first voltage V1 of the AC power source 110 to reach a pre-determined operational limit. This tends to ensure that the AC power source 110 is supporting the AC system 104 at the maximum capacity of the AC power source 110, even during, for example, a substantial electrical general or load change event in the AC system 104.

In a continuation of the step s450, in any operating scenario, the controller 300 may determine a fault condition in the power system.

The controller 300 may determine the fault condition by comparing a voltage of the power system 100 to a voltage threshold and/or by comparing a current of the power system 100 to a current threshold. The controller 300 may determine a fault condition by receiving data indicative of a fault condition from an external controller.

In response to determining the fault condition, the controller 300 may stop outputting the data for controlling the one or more components of the power system 100.

This tends to be useful when, for example, a voltage or current of the power system 100 has reached an unsafe level, and it is required to stop operating the AC power source 110 for safety or for the stability of the AC system 104.

Although in the above-described embodiment, the one or more components of the power system 100 is the AC power source 110, which is a power converter, it is to be understood that embodiments should not be limited in this way.

In another embodiment, the one or more components of the power system 100 may be one or more of: the AC power source 110, wherein the AC power source is a synchronous machine; a monitoring system; an alarm system.

Although in the above-described embodiments, the step s440 comprises the controller 300 providing control parameters to the AC power source 110, it is to be understood that embodiments should not be limited in this way. In another embodiment, at the step s440, the controller compares the first angle $\Phi$ to a first threshold to determine a first result, and/or compares the second angle $\delta$ to a second threshold to determine a second result. The controller 300 then includes the first and/or second results in the data provided to the one or more components of the power system 100 for controlling the one or more components of the power system 100.

In an embodiment wherein the one or more components comprises a monitoring system, the step s440 may comprise the controller 300 providing the data to the monitoring system. The monitoring system may use the data to determine an indication of a health of the AC system 104 based on the data.

In an embodiment wherein the one or more components comprises an alarm system, the step s440 may comprise the controller 300 providing the data to the alarm system. The alarm system may initiate an alarm based on the data.

In the above-described embodiments, because the data is provided to the monitoring system and/or alarm system, the monitoring system and/or alarm system can perform their respective supervisory functions relatively quickly compared to a conventional approach which may have time delays associated with providing such data. This tends to help maintain the stability of the power system 100. For example, the likeliness of the second angle $\delta$ becoming excessive tends to be reduced. Consequently, the likeliness of protection equipment or the like tripping or activating also tends to be reduced.

Although in the above-described embodiments, at the step s410 the controller 300 acquires the first voltage phasor V1 by measuring the voltage waveform at terminals of the AC power source 110, and acquires the current phasor Is by measuring the current waveform at the terminals of the AC power source 110, it is to be understood that embodiments should not be limited in this way. In another embodiment, at the step s410 the controller 300 acquires the first voltage phasor V1 by receiving data, from an external controller, indicative of the voltage waveform at terminals of the AC power source 110, and acquires the current phasor Is by receiving data, from an external controller, indicative of the current waveform at the terminals of the AC power source 110.

The controller 300 may be implemented as a supervisory function that continuously or periodically monitors the first angle $\Phi$, and/or the second angle $\delta$, and/or the third angle $\beta$, and generates an indication of the AC system 104 health and/or stability based on the monitoring.

The controller 300 may generate a system health indication based on the first angle $\Phi$. Alternatively, the controller 300 may estimate the second angle $\delta$, and/or the third angle $\beta$ and use that to generate the system health indication.

If the first angle $\Phi$, and/or the second angle $\delta$, and/or the third angle $\beta$ crosses a pre-determined limit or threshold (i.e., when $\Phi$ < $\Phi$maximum or $\beta$ > $\beta$minimum or $\delta$ > $\delta$maximum), the controller 300 may raise an alarm or trigger initiation of an action to control the AC power source reference (e.g. a power reference or a current reference) in order to ensure the stable operation of the power system 100.

Operation of the second angle $\delta$ at or near to 90 degrees might be considered impractical and therefore a lower angle can be selected, for example 60 degrees. This can be achieved by modifying the minimum value for $\beta$ (for example, $\beta$-minimum) to 60 degrees.

The invention tends to allow a converter connected to any AC network to remain in operation at, or near to, the maximum power flow commensurate with the AC system conditions present. This tends to be accomplished using local measurements only and without recourse to any remote measurements and the necessary telecommunications system.

In doing so the converter tends to support the connected AC system without the risk of voltage collapse or system instability.

The disclosure herein further provides a controller that measures the phase angle difference between the AC voltage and AC current flowing at a converter or machine AC terminals and uses this phase angle difference to determine the phase angle across the intervening AC system impedance.

The disclosure herein further provides a controller for an electrical machine connected to an AC system via a transmission medium, the controller comprising: a measurement unit to measure a phase angle difference between an AC voltage and an AC current at the terminals of the electrical machine; and a phase angle estimation unit to determine a phase angle across an intervening impedance between the electrical machine and the AC system.

The determined phase angle may be used to perform at least one of the following: provide an indication of the health of the AC system; initiate an alarm when the phase angle across the AC system impedance exceeds a pre-defined phase angle value; initiate an action to regulate the output power of the converter or machine to limit the phase angle across the AC system impedance to below the pre-defined phase angle value.

The controller may determine the phase angle across the intervening AC system impedance by calculating an internal angle $\beta$ and using the calculated internal angle to estimate the phase angle across the intervening AC system impedance.

The internal angle $\beta$ may be calculated using the measured phase angle difference.

The controller may regulate the output power of the converter or machine by changing a power reference of the converter or machine.

The controller may change the power reference of the converter or machine such that the internal angle is maintained above a pre-defined minimum threshold value. The pre-defined minimum threshold value may be in the range of 42 degrees to 48 degrees, for instance.

The minimum threshold value may be computed as $\beta$minimum = arctan (1/V2). This may be applicable when V1 does not equal V2.

In the event that the internal angle is at the minimum threshold value and a required power order is not met, the controller may be configured to increase the machine or the converter voltage V2 until it reaches a maximum permitted value V2max.

The controller may be disabled if the AC system is determined to be in a fault condition whereby one or more phases of the AC system are less than a predefined value.

**Claims**

1. A controller (300) for controlling one or more components of a power system (100), wherein the power system (100) comprises an AC power node (110) connected to an AC system (104); the controller (300) configured to:

   determine a first phase angle ($\Phi$) between a first voltage (V1) of the AC power node (110) and a current (Is) of the AC power node (110);
   determine, based on the first angle ($\Phi$), a second angle ($\delta$) between the first voltage (V1) of the AC power node (110) and a second voltage (V2) of the AC system (104); and
   output data indicative of at least the second angle ($\delta$) for controlling the one or more components of the power system.

**2.** The controller of claim 1, wherein the controller is further configured to:
output the data to the one or more components of the power system (100) to control the one or more components of the power system.

**3.** The controller of any preceding claim, wherein the one or more components of the power system (100) comprises the AC power node (110); wherein the controller is configured to:

determine one or more parameters for regulating an input or output power of the AC power node (110), wherein the one or more parameters are determined based on the first angle (Φ) and/or the second angle (δ); and
provide the one or more parameters to the AC power node to control the AC power node (110).

**4.** The controller of claim 3, wherein the controller is further configured to:

calculate a third angle (β) based on the first angle (Φ), wherein the third angle (β) is a phase difference between the first voltage (V1) and a third voltage (Vs), wherein the third voltage represents a voltage across an impedance (120) of the power system (100); and
determine the second angle (δ) based on the third angle (β).

**5.** The controller of claim 4, wherein the controller is configured to calculate the third angle (β) according to the equation:

$$\beta = 90 - \Phi$$

wherein β is the third angle (β), and Φ is the first angle.

**6.** The controller of any one of claims 4 or 5, wherein the controller is configured to determine the second angle (δ) according to the equation:

$$\delta = 180 - 2\beta$$

wherein δ is the second angle and β is the third angle.

**7.** The controller of any one of claims 4 to 6,

wherein the controller is configured to calculate a minimum value ($\beta_{min}$) for the third angle (β), according to the equation:

$$\beta min = \tan^{-1}\frac{V2}{V1}$$

wherein βmin is the minimum value for third angle (β), V1 is the first voltage, and V2 is the second voltage; or
the controller is configured to use a static value for the minimum value ($\beta_{min}$) for the third angle (β), wherein the static value is 45 degrees.

**8.** The controller of claim 7, wherein the controller is configured to:
determine the one or more parameters by implementing a closed-loop control system, such that, in operation of the AC power node (110), the third angle (β) is maintained above the minimum value ($\beta_{min}$).

**9.** The controller of claim 8, wherein the controller is further configured to:

determine, subsequent to providing the one or more parameters to the AC power node, the output power of the AC power node;
determine whether the input or output power of the AC power node substantially matches an expected input or output power; and
in response to the input or output power not substantially matching the expected input or output power, provide one or more updated parameters to the AC power node for regulating the first voltage to a predetermined operational limit of the AC power node.

**10.** The controller of any preceding claim, wherein the controller is further configured to:

compare the first angle (Φ) to a first threshold to determine a first result, and/or compare the second angle (δ) to a second threshold to determine a second result;
wherein the data further comprises the first and/or second results.

**11.** The controller of claim 10, wherein the one or more components comprises a monitoring system; wherein the controller is configured to:
provide the data to the monitoring system such that the monitoring system can determine an indication of a health of the AC system based on the data.

**12.** The controller of claim 10 or 11, wherein the one or more components comprises an alarm system; wherein the controller is configured to:
provide the data to the alarm system for the alarm system to initiate an alarm based on the data.

**13.** The controller of any preceding claim, wherein the controller is further configured to:

determine a fault condition in the power system; and

in response to determining the fault condition, stop outputting the data for controlling the one or more components of the power system.

14. A power system comprising:

an AC power node connected to an AC system; one or more components; and a controller according to any preceding claim, wherein the controller is configured to control the one or more components of the power system; wherein the AC power node preferably comprises a power converter or a synchronous machine; and wherein the one or more components comprise at least one of:

the AC power node; a monitoring system; an alarm system.

15. A method for controlling one or more components of a power system, wherein the power system comprises an AC power node connected to an AC system; the method comprising:

determining, by a controller, a first phase angle ($\Phi$) between a first voltage (V1) of the AC power node (110) and a current (Is) of the AC power node (110); determining, by the controller, based on the first angle ($\Phi$), a second angle ($\delta$) between the first voltage (V1) of the AC power node (110) and a second voltage (V2) of the AC system (104); and outputting, by the controller, data indicative of at least the second angle ($\delta$) for controlling the one or more components of the power system.

Figure 1

Figure 2

Figure 3

START

s410 — Acquire voltage and
current at power node

s420 — Determine phase difference
between voltage and current

s430 — Determine an AC system angle
based on the phase difference

s432 — Determine an internal angle
based on the phase difference

s434 — Determine AC system angle
based on internal angle

s440 — Control components of the power
system based on the AC system
angle and/or the phase difference

s450 — Validation checks and adjustments

END

400

# Figure 4

Figure 5

Figure 6

**EP 4 757 101 A1**

EUROPEAN SEARCH REPORT

| | Application Number |
|---|---|
| | EP 24 21 7896 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/142237 A1 (YUAN XIAOMING [CN] ET AL) 10 June 2010 (2010-06-10) * paragraphs [0001] - [0007], [0027] - [0030]; figures 1/9-9/9 * | 1-15 | INV. H02J3/38 |
| A | US 2013/027993 A1 (TAN ZHUOHUI [CN] ET AL) 31 January 2013 (2013-01-31) * paragraphs [0001] - [0008], [0062], [0063]; figures 1/16-16/16 * | 1-15 | |
| A | ABASI MAHYAR ET AL: "Fault classification and fault area detection in GUPFC-compensated double-circuit transmission lines based on the analysis of active and reactive powers measured by PMUs", MEASUREMENT, INSTITUTE OF MEASUREMENT AND CONTROL. LONDON, GB, vol. 169, 28 September 2020 (2020-09-28), XP086406169, ISSN: 0263-2241, DOI: 10.1016/J.MEASUREMENT.2020.108499 [retrieved on 2020-09-28] * abstract; figure 3 * | 1-15 | |
| A | US 6 819 087 B2 (GEN ELECTRIC [US]) 16 November 2004 (2004-11-16) * columns 5,6; figures 1-3 * | 1-15 | TECHNICAL FIELDS SEARCHED (IPC)  H02J |
| A | US 2024/128752 A1 (HA HENGXU [GB] ET AL) 18 April 2024 (2024-04-18) * abstract; figures 1-12 * | 1-15 | |
| A | US 10 024 892 B2 (JOHANNSSON HJOERTUR [IS]; UNIV DANMARKS TEKNISKE [DK]) 17 July 2018 (2018-07-17) * abstract; figures 1/12-12/12 * | 1-15 | |

The present search report has been drawn up for all claims

| Place of search | Date of completion of the search | Examiner |
|---|---|---|
| Munich | 6 May 2025 | Krasser, Bernhard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7896

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| US 2010142237 | A1 | 10-06-2010 | CN | 101860038 A | 13-10-2010 |
| | | | DK | 2221936 T3 | 06-03-2017 |
| | | | EP | 2221936 A2 | 25-08-2010 |
| | | | US | 2010142237 A1 | 10-06-2010 |
| US 2013027993 | A1 | 31-01-2013 | CN | 102904272 A | 30-01-2013 |
| | | | EP | 2552007 A2 | 30-01-2013 |
| | | | ES | 2806141 T3 | 16-02-2021 |
| | | | JP | 6604599 B2 | 13-11-2019 |
| | | | JP | 2013039026 A | 21-02-2013 |
| | | | KR | 20130014394 A | 07-02-2013 |
| | | | TW | 201315115 A | 01-04-2013 |
| | | | US | 2013027993 A1 | 31-01-2013 |
| US 6819087 | B2 | 16-11-2004 | NONE | | |
| US 2024128752 | A1 | 18-04-2024 | US | 2024128752 A1 | 18-04-2024 |
| | | | WO | 2024081181 A1 | 18-04-2024 |
| US 10024892 | B2 | 17-07-2018 | EP | 2715907 A2 | 09-04-2014 |
| | | | US | 2014343881 A1 | 20-11-2014 |
| | | | WO | 2012163979 A2 | 06-12-2012 |

EPO FORM P0459

For more details about this annex : see Official Journal of the European Patent Office, No. 12/82